(19) Europäisches Patentamt | European Patent Office | Office européen des brevets

(11) **EP 3 208 601 B1**

(12) **FASCICULE DE BREVET EUROPEEN**

(45) Date de publication et mention
de la délivrance du brevet:
**28.08.2019 Bulletin 2019/35**

(51) Int Cl.:
***G01N 21/3504*** *(2014.01)*     ***G01N 21/03*** *(2006.01)*
*G01N 21/61* *(2006.01)*

(21) Numéro de dépôt: **17156786.0**

(22) Date de dépôt: **17.02.2017**

(54) **CAPTEUR INFRAROUGE NON-DISPERSIF POUR DETECTER UN GAZ**

NICHT-DISPERSIVER INFRAROTSENSOR ZUR DETEKTION EINES GASES

NON-DISPERSIVE INFRARED SENSOR FOR DETECTING A GAS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.02.2016 FR 1651324**

(43) Date de publication de la demande:
**23.08.2017 Bulletin 2017/34**

(73) Titulaire: **Commissariat à l'Energie Atomique et
aux Energies
Alternatives
75015 Paris (FR)**

(72) Inventeurs:
• **Barritault, Pierre
38100 Grenoble (FR)**
• **Gidon, Serge
38140 La Murette (FR)**

(74) Mandataire: **Talbot, Alexandre
Cabinet Hecké
28 Cours Jean Jaurès
38000 Grenoble (FR)**

(56) Documents cités:
**EP-A1- 2 573 546**     **US-A- 5 453 620**
**US-A- 5 973 326**     **US-A1- 2005 121 614**
**US-A1- 2007 007 449**

**Description**

**Domaine technique**

La présente invention a trait à un capteur infrarouge non-dispersif pour détecter un gaz. Un tel capteur est classiquement dénommé NDIR pour « *NonDispersive InfraRed* » en langue anglaise. Plus précisément, la présente invention vise préférentiellement un capteur NDIR compact, à bas coût et à faible consommation électrique.

L'application préférentiellement envisagée est la détection d'un gaz, par exemple le $CO_2$, de manière fiable en environnement industriel, la détection étant classiquement une détection de seuil. Une autre application possible est l'analyse d'un gaz, impliquant des mesures quantitatives précises, sélectives, et stables de manière à obtenir une analyse de composition, voire une détection individuelle de la charge en $CO_2$ de l'air respiré.

Un tel capteur NDIR peut être intégré dans un système portatif tel qu'un téléphone portable, un ordinateur, un appareil photo etc. La présente invention peut également trouver son application dans des systèmes fixes pour la domotique, l'analyse de la qualité de l'air intérieur et extérieur, les détecteurs industriels etc.

**Etat de la technique antérieure**

Un capteur NDIR comporte classiquement :

- une cavité optique adaptée pour recevoir le gaz ;
- une source lumineuse agencée pour émettre une lumière infrarouge dans la cavité optique ;
- au moins un détecteur infrarouge agencé pour détecter la lumière infrarouge.

Le principe de fonctionnement d'un capteur NDIR consiste à mesurer, par le détecteur infrarouge, la baisse d'intensité lumineuse lorsque le gaz à détecter se trouve à l'intérieur de la cavité optique. En effet, le gaz à l'intérieur de la cavité optique absorbe la lumière infrarouge à une longueur d'onde (sur une bande spectrale) spécifique au gaz à détecter. Pour ce faire, le détecteur infrarouge est classiquement muni d'un filtre adapté pour filtrer ladite longueur d'onde (ou la bande spectrale) prédéterminée.

Par exemple, dans l'hypothèse d'une distribution uniforme des molécules gazeuses, la loi de Beer-Lambert donne une formule pour la transmittance T de la lumière à travers un gaz : $T = e^{-\sigma N l}$, où :

- $\sigma$ est la section efficace d'absorption d'une molécule de gaz,
- N est le nombre de molécules de gaz par unité de volume,
- l est la longueur d'interaction entre le gaz et la lumière.

A titre d'exemple, pour le $CO_2$, la longueur d'interaction l est préférentiellement comprise entre quelques mm et quelques dizaines de cm.

Le capteur NDIR peut comporter plusieurs détecteurs infrarouges, chacun étant sensible à une longueur d'onde particulière, et ce afin de détecter plusieurs gaz différents. Un des détecteurs infrarouges peut être sensible à une longueur d'onde ne correspondant à l'absorption d'aucun gaz ; ce détecteur infrarouge sert à suivre les fluctuations de la source lumineuse et constitue une voie de référence.

Une grande compacité est recherchée pour le capteur NDIR. Du fait de la longueur d'interaction élevée (pouvant atteindre quelques dizaines de cm), il n'est pas possible d'utiliser une cavité optique à trajet direct entre la source lumineuse et le détecteur infrarouge, y compris en présence de lentilles. Par « cavité à trajet direct », on entend une cavité fonctionnant sans miroirs qui permettent de replier le faisceau lumineux.

A cet égard, un capteur NDIR connu de l'état de la technique, notamment du document US 2003/0058439 (ci-après D1), comporte :

- une cavité optique adaptée pour recevoir le gaz, et délimitée par :

  des première et seconde extrémités opposées, et
  une partie de liaison reliant les première et seconde extrémités ;

- une source lumineuse agencée pour émettre une lumière infrarouge dans la cavité optique ;
- au moins un détecteur infrarouge agencé pour détecter la lumière infrarouge ;
- un ensemble de miroirs agencé dans la cavité optique pour guider la lumière infrarouge vers ledit au moins un détecteur infrarouge.

Ainsi, il est connu de replier la cavité optique au sens où un ensemble de miroirs est agencé dans la cavité optique pour guider la lumière infrarouge vers le détecteur infrarouge selon un trajet indirect issu de réflexions successives sur les miroirs. Cette solution permet de réduire la taille du capteur NDIR dans le plan de la cavité optique, mais pas dans son épaisseur (au sens de la dimension transversale de la partie de liaison entre les première et seconde extrémités). En effet, l'épaisseur de la cavité optique est dictée par l'épaisseur de la source lumineuse. Par exemple, dans D1, la source lumineuse est un filament incandescent d'une longueur de 1,5 mm.

Or, une réduction supplémentaire de l'épaisseur de la cavité optique conduirait à une réduction de la taille de la source lumineuse, et par là-même à une perte d'efficacité optique. Une possibilité de compensation serait d'augmenter la puissance de la source lumineuse, au détriment de la consommation électrique.

La présente invention vise donc l'obtention d'un capteur NDIR pour détecter un gaz, alliant compacité et faible consommation électrique.

Le document EP 2573546 divulgue un capteur de gaz comprenant une source lumineuse et un détecteur de lumière configuré pour recevoir la lumière transmise tout en étant réfléchie dans une cellule de forme cylindrique avec des bases ayant la forme d'une ellipse. Le capteur comporte deux ouvertures configurées pour introduire un gaz dans l'espace de cellule sur une ligne reliant la ligne focale L1 et la ligne focale L2. Le document divulgue une cellule où la cavité est formée par un espace fermé à l'exception de deux ouvertures.

**Exposé de l'invention**

Ainsi, la présente invention vise à remédier en tout ou partie aux inconvénients précités, et concerne à cet effet un capteur infrarouge non-dispersif pour détecter un gaz, comportant :

- une cavité optique adaptée pour recevoir le gaz, et délimitée par :

  des première et seconde extrémités longitudinales et opposées, et
  une partie de liaison s'étendant transversalement entre la première extrémité et la seconde extrémité pour relier les première et seconde extrémités ;

- une source lumineuse agencée pour émettre une lumière infrarouge dans la cavité optique ;
- au moins un détecteur infrarouge agencé pour détecter la lumière infrarouge ;
- au moins un miroir agencé dans la cavité optique pour guider la lumière infrarouge vers ledit au moins un détecteur infrarouge ;
- des premier et second éléments réfléchissants s'étendant respectivement aux première et seconde extrémités de la cavité optique, chacun des premier et second éléments comportant une surface réfléchissante, et possédant un coefficient de réflexion de la lumière infrarouge supérieur ou égal à 75% pour tout angle d'incidence, les premier et second éléments réfléchissants étant des miroirs plans possédant ledit coefficient de réflexion ; le capteur étant conçu de sorte à disposer la source lumineuse entre les premier et second éléments réfléchissants, la source lumineuse étant en outre orientée de manière à avoir un axe optique sécant audit au moins un miroir, ledit au moins un miroir étant formé par un revêtement réfléchissant déposé sur la partie de liaison.

Définitions

Par « *coefficient de réflexion* », on entend le coefficient de réflexion en intensité, pour un angle d'incidence compris entre 0° (incidence normale) et 90° (incidence rasante), pour une longueur d'onde donnée, et tenant compte des polarisations « s » et « p » moyennées arithmétiquement. L'angle d'incidence est l'angle entre la direction de propagation de la lumière infrarouge et la normale au premier ou au second élément réfléchissant.

Par « infrarouge », on entend une longueur d'onde comprise entre 0,78 $\mu$m et 12 $\mu$m.

Ainsi, un tel capteur NDIR selon l'invention permet d'augmenter l'efficacité optique de la cavité optique relativement à l'état de la technique. Le ou les miroirs permettent de conjuguer la source lumineuse avec le ou les détecteurs infrarouges dans le plan de la cavité optique. Or, les inventeurs ont constaté de manière surprenante qu'il était possible d'imager correctement la source lumineuse sur le ou les détecteurs infrarouges avec la présence additionnelle d'un guide d'onde agencé pour guider la lumière infrarouge suivant la direction de l'épaisseur de la cavité optique, c'est-à-dire la dimension transversale de la partie de liaison entre les première et seconde extrémités. Un tel guide d'onde est formé par les premier et second éléments réfléchissants s'étendant respectivement aux première et seconde extrémités de la cavité optique, et possédant un coefficient de réflexion de la lumière infrarouge supérieur ou égal à 75% pour tout angle d'incidence.

Selon une forme d'exécution, ledit au moins miroir est disposé dans la partie de liaison transversale. Ainsi, un tel capteur NDIR selon cette forme d'exécution permet, à la fois, d'augmenter l'efficacité optique de la cavité optique relativement à l'état de la technique, et d'augmenter sa compacité en réduisant l'épaisseur de la cavité sans augmenter la puissance de la source lumineuse. L'agencement astucieux de la source lumineuse, du ou des miroirs, et des éléments réfléchissants s'étendant aux extrémités de la cavité optique, permet de conjuguer la source lumineuse avec le ou les détecteurs infrarouges dans le plan de la cavité optique, de sorte à guider la lumière infrarouge suivant la direction de l'épaisseur de la cavité optique en s'affranchissant de la disposition de réflecteurs à l'intérieur de la cavité optique.

Selon une forme d'exécution, les première et seconde extrémités et la partie de liaison forment un cylindre délimitant la cavité optique ; les première et seconde extrémités formant les bases du cylindre.

Définition

Par « *cylindre* », on entend une surface définie par une droite (appelée génératrice) décrivant une courbe (appelée courbe directrice) suivant une direction fixe. La direction fixe définit la hauteur du cylindre c'est-à-dire l'épaisseur de la cavité optique. Le plan de la cavité optique correspond au plan de la courbe directrice. Les première et seconde extrémités sont les bases du cylindre, et peuvent être ouvertes ou fermées. En l'espèce, les bases du cylindre sont préférentiellement fermées par les premier et second éléments réfléchissants. La courbe directrice peut être ouverte ou fermée. En l'espèce, la courbe directrice est préférentiellement ouverte pour recevoir la source lumineuse et les détecteurs infrarouges. La courbe directrice possède une fonction imageante au sens qu'elle est apte à imager correctement la source lumineuse sur le ou les détecteurs infrarouges. Le cylindre n'est pas limité à une forme particulière de la courbe directrice, telle qu'un cercle, une ellipse, une parabole, une hyperbole etc.

Selon une variante d'exécution, la partie de liaison s'étend transversalement entre les première et seconde extrémités suivant une direction curviligne.

Préférentiellement, la direction curviligne forme un arc de cercle, et les première et seconde extrémités et la partie de liaison forment un tore tronqué délimitant la cavité optique ; le tore étant tronqué par un plan perpendiculaire à la direction curviligne. Le tore tronqué peut comporter des ouvertures adaptées pour recevoir la source lumineuse et les détecteurs infrarouges.

Selon une autre variante d'exécution, les première et seconde extrémités et la partie de liaison forme un tronc de cône à bases parallèles délimitant la cavité optique, les première et seconde extrémités formant lesdites base parallèles.

Le tronc de cône peut comporter des ouvertures adaptées pour recevoir la source lumineuse et les détecteurs infrarouges.

Avantageusement, ledit coefficient de réflexion est supérieur ou égal à 80%, de préférence supérieur ou égal à 85%, plus préférentiellement supérieur ou égal à 90%, pour tout angle d'incidence.

Ainsi, un tel coefficient de réflexion permet d'augmenter l'efficacité optique de la cavité optique.

Avantageusement, ledit coefficient de réflexion est supérieur ou égal à 95%, de préférence supérieur ou égal à 98%, pour tout angle d'incidence inférieur à 45°.

Avantageusement, la surface réfléchissante est d'un matériau métallique, de préférence sélectionné dans le groupe comportant l'or, l'argent et l'aluminium.

Ainsi, de tels matériaux métalliques permettent d'obtenir des coefficients de réflexion dans l'infrarouge très élevés, typiquement supérieurs à 95%.

Avantageusement, la surface réfléchissante est revêtue d'une couche de protection contre une corrosion du matériau métallique.

Ainsi, la corrosion (telle qu'une sulfuration) est évitée afin de ne pas dégrader la qualité du guide optique formé par les premier et second éléments réfléchissants.

Selon une caractéristique, le capteur comporte un détecteur infrarouge de référence, et ledit au moins un miroir présente une rugosité de surface supérieure à un seuil à partir duquel la lumière infrarouge diffusée par ledit au moins un miroir peut être détectée par le détecteur infrarouge de référence.

Ainsi, la lumière infrarouge diffusée par la surface du miroir permet d'obtenir un flux pour une voie de référence ; il est donc possible de tirer profit d'un défaut de qualité dudit au moins un miroir.

Avantageusement, les surfaces réfléchissantes des premier et second éléments réfléchissants sont parallèles.

Ainsi, les premier et second éléments réfléchissants forment un guide planaire. Les inventeurs ont également constaté qu'un léger bombé des surfaces réfléchissantes n'était pas préjudiciable pour imager correctement la source lumineuse sur le ou les détecteurs infrarouges, et obtenir de bonnes performances du capteur NDIR. A titre d'exemple, des formes légèrement bombées (de type calotte sphérique, d'une hauteur de 40 $\mu$m et d'un diamètre de 13 mm) pour le guide planaire conduisent à une baisse maximale de 20% de l'intensité lumineuse détectée.

Avantageusement, la partie de liaison s'étend transversalement entre les première et seconde extrémités suivant la normale aux surfaces réfléchissantes, à $\pm$ 3° près.

Par ailleurs, les inventeurs ont constaté que l'orthogonalité approximative ($\pm$ 3°) de la partie de liaison relativement aux surfaces réfléchissantes, planes et parallèles, n'était pas préjudiciable pour imager correctement la source lumineuse sur le ou les détecteurs infrarouges, et obtenir de bonnes performances du capteur NDIR. Par exemple, la baisse de l'intensité lumineuse détectée est typiquement inférieure à 5% pour un écart de 3°.

Selon une caractéristique, la cavité optique est dépourvue de lentilles.

La présente invention concerne également un procédé d'utilisation d'un capteur selon l'invention, dans lequel le gaz est sélectionné dans le groupe comportant le monoxyde de carbone, le dioxyde de carbone, au moins un hydrocarbure, un hydrochlorofluorocarbure, un chlorofluorocarbure, le monoxyde d'azote, le dioxyde d'azote, le dioxyde de soufre, l'ozone.

La présente invention concerne également un procédé de fabrication d'un capteur infrarouge non-dispersif pour détecter un gaz, comportant les étapes :

a) former une cavité optique adaptée pour recevoir le gaz, et délimitée par :

- des première et seconde extrémités opposées, et
- une partie de liaison reliant les première et seconde extrémités ;

b) agencer une source lumineuse pour émettre une lumière infrarouge dans la cavité optique entre les premier et second éléments réfléchissants ;
c) agencer au moins un détecteur infrarouge pour détecter la lumière infrarouge ;
d) agencer au moins un miroir dans la cavité optique pour guider la lumière infrarouge vers ledit au moins un détecteur infrarouge, ledit au moins un miroir étant formé par un revêtement réfléchissant déposé sur la partie de liaison, la source lumineuse étant orientée de manière à avoir un axe optique sécant audit au moins un miroir ;
le procédé comportant une étape consistant à former des premier et second éléments réfléchissants s'étendant respectivement aux première et seconde extrémités de la cavité optique, et possédant un coefficient de réflexion de la lumière infrarouge supérieur ou égal à 75% pour tout angle d'incidence, les premier et second éléments réfléchissants étant des miroirs plans possédant chacun ledit coefficient de réflexion.

Ainsi, un tel procédé selon l'invention permet d'augmenter l'efficacité optique de la cavité optique relativement à l'état de la technique. Le ou les miroirs permettent de conjuguer la source lumineuse avec le ou les détecteurs infrarouges dans le plan de la cavité optique. Or, les inventeurs ont constaté de manière surprenante qu'il était possible d'imager correctement la source lumineuse sur le ou les détecteurs infrarouges avec la présence additionnelle d'un guide d'onde agencé pour guider la lumière infrarouge suivant la direction de l'épaisseur de la cavité optique, c'est-à-dire suivant la dimension transversale de la partie de liaison entre les première et seconde extrémités. Un tel guide d'onde est formé par les premier et second éléments réfléchissants s'étendant respectivement aux première et seconde extrémités de la cavité optique, et possédant un coefficient de réflexion de la lumière infrarouge supérieur ou égal à 75% pour tout angle d'incidence.

Avantageusement, l'étape a) comporte les étapes :

$a_1$) prévoir des premier et second substrats d'un matériau, le matériau étant de préférence semi-conducteur, plus préférentiellement le silicium ;
$a_2$) évider chacun des premier et second substrats de manière à former un fond et à conserver une partie superficielle ; l'étape $a_2$) étant de préférence exécutée par une gravure ionique réactive ;
$a_3$) assembler les premier et second substrats de sorte que :

- les fonds forment les première et seconde extrémités opposées de la cavité optique,
- les parties superficielles conservées lors de l'étape $a_2$) forment la partie de liaison reliant les première et seconde extrémités.

Ainsi, les évidements des premier et second substrats obtenus lors de l'étape $a_2$) permettent d'obtenir deux demi-cavités. La cavité optique est formée lors de l'étape $a_3$) en assemblant les premier et second substrats afin de réunir les deux demi-cavités. Le fait de former un évidement, par exemple par une gravure ionique réactive, dans un substrat d'un matériau semi-conducteur est une solution peu coûteuse et viable car l'inclinaison obtenue des parties superficielles relativement à la normale aux premier et second substrats est typiquement de l'ordre de 1° à 2°. La partie de liaison obtenue s'étend donc transversalement entre les première et seconde extrémités de la cavité optique suivant la normale aux premier et second substrats, à $\pm$ 3° près. Il est donc possible d'imager correctement la source lumineuse sur le ou les détecteurs infrarouges, et obtenir de bonnes performances du capteur NDIR. Par exemple, la baisse de l'intensité lumineuse détectée est typiquement inférieure à 5% pour un écart de 3°.

Avantageusement, les premier et second éléments réfléchissants sont formés par un dépôt d'un matériau métallique sur les fonds des premier et second substrats.

Avantageusement, ledit au moins un miroir agencé lors de l'étape d) est formé par un dépôt d'un matériau métallique sur un bord latéral d'une partie superficielle conservée lors de l'étape $a_2$).

Selon une variante, l'étape a) comporte les étapes :

$a_1$) prévoir des premier et second moules comportant respectivement une empreinte de première et seconde pièces comportant chacune une embase surmontée d'une partie superficielle ;

$a_2$) injecter un matériau plastique dans les premier et second moules de manière à obtenir les première et seconde pièces ;

$a_3$) assembler les première et seconde pièces de sorte que :

- les embases forment les première et seconde extrémités opposées de la cavité optique,
- les parties superficielles forment la partie de liaison reliant les première et seconde extrémités.

Ainsi, la cavité optique est formée lors de l'étape $a_3$) en assemblant les première et seconde pièces afin de réunir deux demi-cavités délimitées chacune par l'embase et la partie superficielle correspondante. L'injection plastique est une solution peu coûteuse et viable dans la mesure où les défauts de forme ne sont pas préjudiciables pour imager correctement la source lumineuse sur le ou les détecteurs infrarouges. A titre d'exemple, des formes légèrement bombées (de type calotte sphérique, d'une hauteur de 40 $\mu$m et d'un diamètre de 13 mm) pour le guide planaire (formé à partir des embases) conduisent à une baisse maximale de 20% de l'intensité lumineuse détectée.

Avantageusement, les premier et second éléments réfléchissants sont formés par un dépôt d'un matériau métallique sur les embases des première et seconde pièces.

Avantageusement, ledit au moins un miroir agencé lors de l'étape d) est formé par un dépôt d'un matériau métallique sur un bord latéral d'une partie superficielle.

## Brève description des dessins

D'autres caractéristiques et avantages apparaîtront dans la description qui va suivre de différents modes de réalisation de l'invention, donnés à titre d'exemples non limitatifs, en référence aux dessins annexés dans lesquels :

- la figure 1 est une vue schématique en coupe d'un capteur NDIR selon un mode de réalisation de l'invention ;
- la figure 2 est une vue schématique en perspective éclatée d'un capteur NDIR selon un mode de réalisation de l'invention ;
- la figure 3 est une vue schématique en perspective éclatée du capteur NDIR illustré à la figure 2 selon un angle de vue différent ;
- la figure 4 est un graphique représentant en abscisses le coefficient de réflexion (en %) de la lumière infrarouge des premier et second éléments réfléchissants, et en ordonnées le flux lumineux (en % du flux émis par la source lumineuse) reçu sur le ou les détecteurs infrarouges ;
- la figure 5 est une vue schématique de dessus illustrant le trajet des rayons lumineux au sein de la cavité optique pour un agencement particulier de miroirs et de détecteurs infrarouges ;
- la figure 6 est une vue schématique en perspective illustrant le trajet des rayons lumineux au sein de la cavité optique, pour le même agencement particulier que la figure 5,
- les figures 7 et 8 sont des vues schématiques de côté respectivement des premier et second éléments réfléchissants,
- les figures 9 et 10 sont des vues schématiques de dessus respectivement des premier et second éléments réfléchissants,
- les figures 11 à 13 sont des vues schématiques de dessus illustrant le trajet des rayons lumineux au sein de la cavité optique pour différents agencements de miroirs et de détecteurs infrarouges.

## Exposé détaillé des modes de réalisation

Pour les différents modes de réalisation, les caractéristiques techniques décrites ci-après sont à considérer isolément ou selon toute combinaison techniquement possible ; les mêmes références sont utilisées pour des éléments identiques ou assurant la même fonction, par souci de simplification de la description.

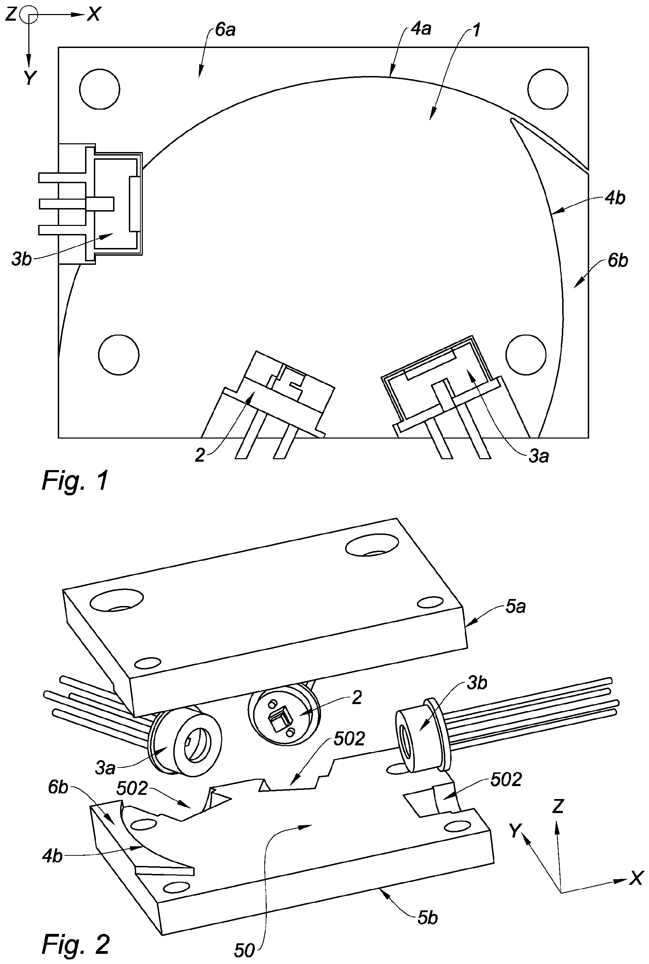

Aux figures 1 à 13 est illustré un capteur infrarouge non-dispersif (NDIR) pour détecter un gaz, comportant :

- une cavité optique 1 adaptée pour recevoir le gaz, et délimitée par :

des première et seconde extrémités 100, 101 longitudinales et opposées, et
une partie de liaison 6a, 6b s'étendant transversalement entre la première extrémité 100 et la deuxième extrémité 101 pour relier les première et seconde extrémités 100, 101 ;

- une source lumineuse 2 agencée pour émettre une lumière infrarouge dans la cavité optique 1 ;
- au moins un détecteur infrarouge 3a, 3b agencé pour détecter la lumière infrarouge ;
- au moins un miroir 4a, 4b agencé dans la cavité optique 1 pour guider la lumière infrarouge vers ledit au moins un détecteur infrarouge 3a, 3b.

Le capteur NDIR comporte des premier et second éléments réfléchissants 5a, 5b s'étendant respectivement aux première et seconde extrémités 100, 101 de la cavité optique 1, et possédant un coefficient de réflexion de la lumière infrarouge supérieur ou égal à 75% pour tout angle d'incidence.

En outre, la source lumineuse 2 est disposée entre la première extrémité 100 et la deuxième extrémité 101. La source lumineuse 2 est agencée de sorte à être orientée vers la partie de liaison 6a, 6b.

Premier et second éléments réfléchissants

Les premier et second éléments réfléchissants 5a, 5b possèdent préférentiellement un coefficient de réflexion de la lumière infrarouge supérieur ou égal à 80%, de préférence supérieur ou égal à 85%, plus préférentiellement supérieur ou égal à 90%, pour tout angle d'incidence. Avantageusement, le coefficient de réflexion de la lumière infrarouge est supérieur ou égal à 95%, de préférence supérieur ou égal à 98% pour tout angle d'incidence inférieur à 45°.

Les premier et second éléments réfléchissants 5a, 5b sont préférentiellement réalisés chacun à partir d'une plaque. Les plaques sont munies d'ouvertures 502 transversales conformées pour recevoir la source lumineuse 2 et le ou les détecteurs infrarouges 3a, 3b lorsque les plaques sont mises en contact et fixées entre elles. Chacun des premier et second éléments 5a, 5b comporte une surface réfléchissante 50 possédant le coefficient de réflexion de la lumière infrarouge (cf. supra pour la quantification). La surface réfléchissante 50 est plane, et les premier et second éléments 5a, 5b forment des miroirs plans.

Chaque plaque comporte une partie superficielle 6a, 6b surmontant la surface réfléchissante 50. La surface réfléchissante 50 et la partie superficielle 6a, 6b de chaque plaque délimitent une demi-cavité. Lorsque les plaques sont mises en contact et fixées entre elles :

- les surfaces réfléchissantes 50 forment les première et seconde extrémités 100, 101 opposées de la cavité optique 1,
- les parties superficielles 6a, 6b forment la partie de liaison reliant les première et seconde extrémités 100, 101.

Autrement dit, les surfaces réfléchissantes 50 forment les premières et secondes extrémités longitudinales et opposées de la cavité optique 1, et les parties superficielles 6a, 6b forment des parois transversales de la cavité optique reliant les première et seconde extrémités 100, 101.

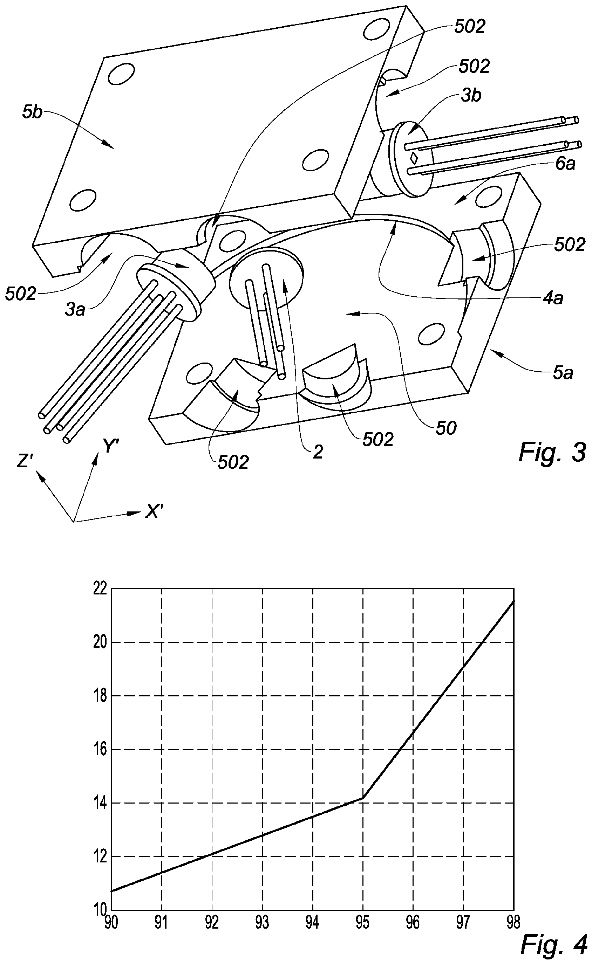

L'évolution du flux lumineux reçu par un détecteur infrarouge 3a, 3b (en % du flux émis par la source lumineuse 2) est illustrée à la figure 4 pour différentes valeurs de coefficients de réflexion. On constate que l'évolution du flux lumineux reçu n'est pas linéaire en fonction du coefficient de réflexion, et que le flux lumineux reçu augmente d'autant plus vite que l'on a un fort coefficient de réflexion.

La surface réfléchissante 50 de chacun des premier et second éléments réfléchissants 5a, 5b est plane. La surface réfléchissante 50 de chacun des premier et second éléments réfléchissants 5a, 5b est avantageusement d'un matériau métallique, de préférence sélectionné dans le groupe comportant l'or, l'argent et l'aluminium. La surface réfléchissante 50 de chacun des premier et second éléments réfléchissants 5a, 5b est avantageusement revêtue d'une couche de protection contre une corrosion du matériau métallique. La couche de protection est avantageusement réalisée dans un matériau sélectionné dans le groupe comportant $SiO_2$, $SiN$, $Si_3N_4$, un carbone amorphe DLC (pour l'acronyme *Diamond-like carbon*), le polytétrafluoroéthylène (PTFE), Pt, TiN. Les surfaces réfléchissantes 50, planes, des premier et second éléments réfléchissants 5a, 5b sont avantageusement parallèles.

Ensemble de miroirs

Le capteur NDIR comporte avantageusement un ensemble de miroirs 4a, 4b agencé pour détecter la lumière infrarouge. L'ensemble de miroirs 4a, 4b possède avantageusement un coefficient de réflexion de la lumière infrarouge supérieur ou égal à 75% pour tout angle d'incidence. Ledit coefficient de réflexion est avantageusement supérieur ou égal à 80%, préférentiellement supérieur ou égal à 85%, plus préférentiellement supérieur ou égal à 90%, pour tout angle d'incidence. Avantageusement, le coefficient de réflexion de la lumière infrarouge est supérieur ou égal à 95%, de préférence supérieur ou égal à 98% pour tout angle d'incidence inférieur à 45°.

Selon une caractéristique avantageuse, au moins un miroir parmi l'ensemble de miroirs 4a, 4b présente une rugosité de surface supérieure à un seuil à partir duquel la lumière infrarouge diffusée par la surface du miroir 4a, 4b correspondant peut être détectée par un détecteur infrarouge de référence 3b. Les inventeurs ont constaté de manière surprenante que la diffusion de la lumière infrarouge par la surface rugueuse du miroir 4a, 4b correspondant n'est pas préjudiciable pour imager correctement la source lumineuse 2 sur le ou les détecteurs infrarouges 3a, 3b, et obtenir de bonnes performances du capteur NDIR. Il est donc possible de tirer profit d'un défaut de qualité du miroir 4a, 4b correspondant afin d'obtenir un flux pour une voie de référence, le flux étant formé par la lumière infrarouge diffusée par la surface rugueuse du miroir 4a, 4b correspondant.

Selon une variante, au moins un miroir parmi l'ensemble de miroirs 4a, 4b présente une surface structurée (« *waviness* » en langue anglaise) adaptée de sorte que la lumière infrarouge diffusée par la surface structurée peut être détectée par un détecteur infrarouge de référence 3b. Pour ce faire, la surface structurée présente une période moyenne (notée « a ») vérifiant la relation suivante :

$$a = \lambda \frac{L}{l}$$

où :

-   L est la dimension caractéristique (e.g. la longueur) de la cavité optique 1,
-   $\lambda$ est la longueur d'onde de la lumière infrarouge,
-   l est la distance entre le miroir 4a, 4b correspondant et le détecteur infrarouge de référence 3b.

La période moyenne « a » n'est pas constante sur toute la surface structurée afin de ne pas induire des ordres de diffraction.

Les inventeurs ont constaté que la diffusion de la lumière infrarouge par une telle surface structurée permet d'imager correctement la source lumineuse 2 sur le ou les détecteurs infrarouges 3a, 3b, et obtenir de bonnes performances du capteur NDIR. Ainsi, il est possible d'obtenir un flux pour une voie de référence, le flux étant formé par la lumière infrarouge diffusée par la surface structurée.

L'ensemble de miroirs comporte préférentiellement un premier miroir elliptique 4a, dit de mesure, et un second miroir elliptique 4b, dit de référence. Le miroir elliptique de mesure 4a est monté sur la plaque du premier élément réfléchissant 5a. Plus précisément, le miroir elliptique de mesure 4a est agencé à la surface réfléchissante 50 du premier élément réfléchissant 5a. Le miroir elliptique de mesure 4a s'étend préférentiellement sur un bord latéral de la partie superficielle 6a de la plaque du premier élément réfléchissant 5a. Le miroir elliptique de référence 4b est monté sur la plaque du second élément réfléchissant 5b. Plus précisément, le miroir elliptique de référence 4b est agencé à la surface réfléchissante 50 du second élément réfléchissant 5b. Le miroir elliptique de référence 4b s'étend préférentiellement sur un bord latéral de la partie superficielle 6b de la plaque du second élément réfléchissant 5b.

A titre d'exemple non limitatif, les dimensions (a, b, c) des ellipses des premier et second miroirs elliptiques 4a, 4b sont rassemblées dans le tableau ci-après :

| Dimension | a (mm) | b (mm) | c (mm) |
|---|---|---|---|
| Miroir de mesure 4a | 15 | 14,58 | 3,5 |
| Miroir de référence 4b | 18,28 | 17 | 6 |

où « a » est le demi-grand axe, « b » est le demi-petit axe, et « c » est la distance entre le centre et le foyer de l'ellipse correspondante.

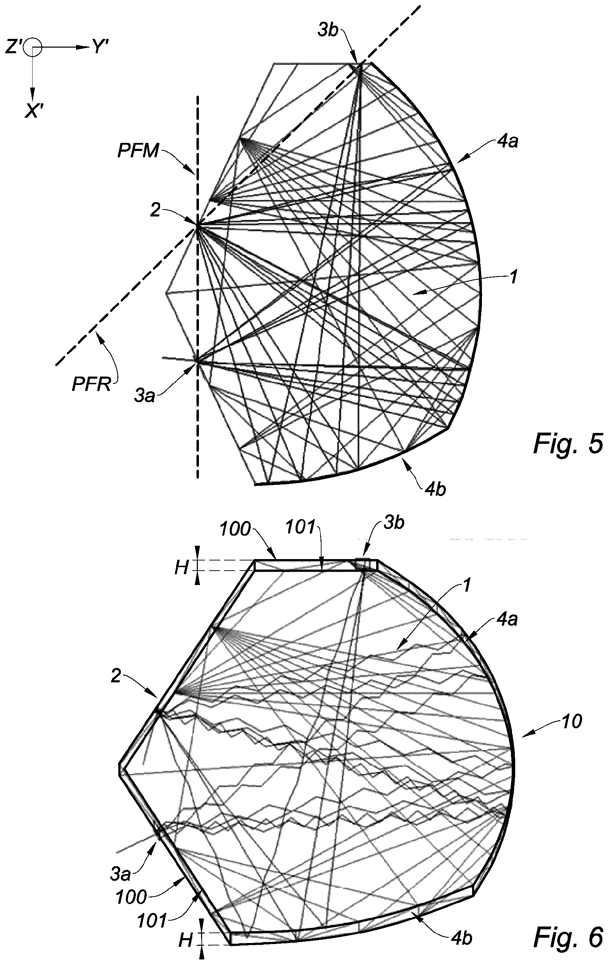

Comme illustré aux figures 5 et 6, les deux foyers de chacun des premier et second miroirs elliptiques 4a, 4b se trouvent dans des plans respectivement appelés plan foyer mesure PFM et plan foyer référence PFR, s'étendant suivant l'épaisseur de la cavité optique 1 (c'est-à-dire suivant Z ou Z'). A titre d'exemple non limitatif, les plans PFM, PFR forment entre eux un angle dièdre de 45°.

L'ensemble de miroirs peut présenter différentes configurations selon la longueur d'interaction l désirée entre le gaz et la lumière infrarouge et le nombre de détecteurs infrarouges 3a, 3b utilisés.

Selon une première variante, il est possible de supprimer un miroir elliptique 4a, 4b si l'on utilise un seul détecteur infrarouge 3a, 3b, et ce afin de maximiser le flux reçu pour une application nécessitant une grande sensibilité.

Selon une deuxième variante, il est possible de partitionner un miroir elliptique en une pluralité de portions de miroirs elliptiques possédant un foyer commun si l'on utilise une pluralité de détecteurs infrarouges 3a, 3b.

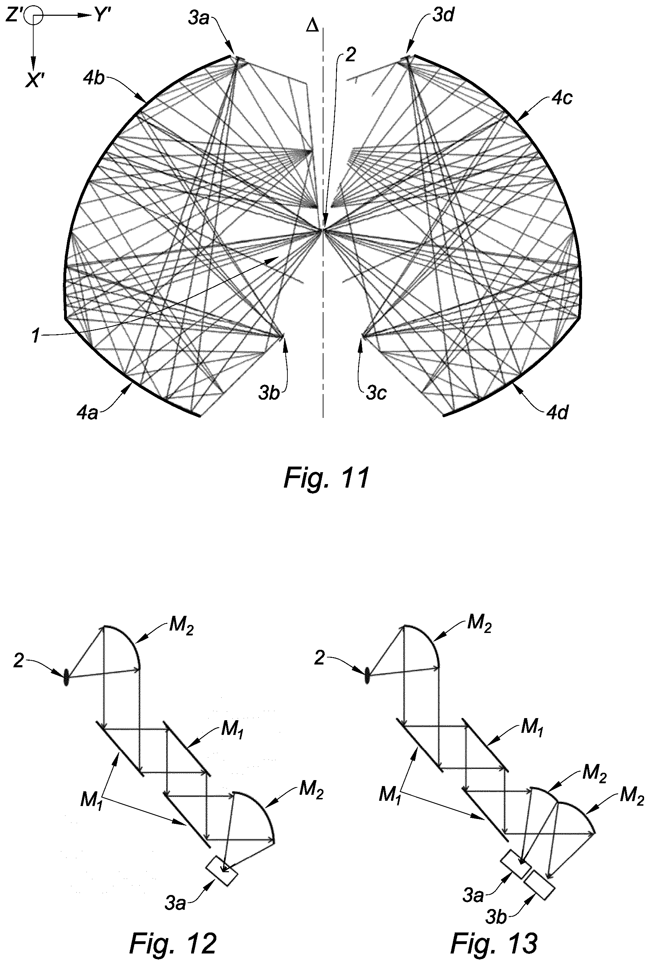

Selon une troisième variante illustrée à la figure 11, il est possible d'agencer symétriquement un ensemble de miroirs elliptiques 4a, 4b, 4c, 4d dans le plan (X', Y') de la cavité optique 1 de part et d'autre d'un axe de symétrie $\Delta$, et d'agencer une source lumineuse 2 le long de l'axe de symétrie $\Delta$ de manière à optimiser la consommation électrique de la source lumineuse 2, la source lumineuse 2 émettant dans toutes les directions.

Selon une quatrième variante illustrée aux figures 12 et 13, il est possible de remplacer les miroirs elliptiques 4a, 4b par des miroirs paraboliques $M_2$ hors d'axe (c'est-à-dire hors de l'axe optique) et des miroirs plans $M_1$. Un miroir parabolique $M_2$ est agencé pour collimater la source lumineuse 2 ; le faisceau collimaté est réfléchi par les miroirs plans $M_1$ puis est focalisé sur le détecteur 3a (figure 12) ou les détecteurs 3a, 3b (figure 13) par au moins un miroir parabolique $M_2$ additionnel.

Cavité optique

De manière préférentielle, le miroir elliptique de mesure 4a, le miroir elliptique de référence 4b et les surfaces réfléchissantes 50 des premier et second éléments réfléchissants 5a, 5b forment un cylindre 10 délimitant la cavité optique 1.

La courbe directrice du cylindre 10, correspondant à une section du cylindre 10 dans un plan (X, Y) -ou (X', Y')-, est une courbe ouverte comportant des première et seconde portions elliptiques (cf. figure 1). Les première et seconde portions elliptiques correspondent aux premier et second miroirs elliptiques 4a, 4b. Les première et seconde extrémités 100, 101 du cylindre 10 (c'est-à-dire les bases du cylindre 10) sont fermées par les surfaces réfléchissantes 50 des premier et second éléments réfléchissants 5a, 5b. L'épaisseur de la cavité optique 1 correspond à la hauteur H du cylindre 10, suivant la direction Z (ou Z'). A titre d'exemple, H= 600 $\mu$m.

D'autres formes sont envisageables pour la cavité optique 1. Les surfaces réfléchissantes 50 forment les première et seconde extrémités 100, 101 de la cavité optique 1. Les surfaces réfléchissantes 50 et la partie de liaison 6a, 6b (le cas échéant le ou les miroirs 4a, 4b s'étendant à partir de la partie de liaison 6a, 6b) délimitent la cavité optique 1.

A titre d'exemples non limitatifs, la partie de liaison 6a, 6b peut s'étendre transversalement entre les surfaces réfléchissantes 50 suivant une direction curviligne (donc non rectiligne, contrairement au cylindre 10). La direction curviligne peut former un arc de cercle auquel cas les surfaces réfléchissantes 50 et la partie de liaison 6a, 6b peuvent former un tore tronqué par un plan perpendiculaire à la direction curviligne. Le tore tronqué peut comporter des ouvertures adaptées pour recevoir la source lumineuse 2 et le ou les détecteurs infrarouges 3a, 3b. On entend par « tore » la surface engendrée par la révolution d'une courbe plane (ouverte ou fermée) autour d'un axe situé dans le plan de ladite courbe plane.

Les surfaces réfléchissantes 50 et la partie de liaison 6a, 6b peuvent former un tronc de cône à base parallèles, les surfaces réfléchissantes 50 formant les bases parallèles. Le tronc de cône peut comporter des ouvertures adaptées pour recevoir la source lumineuse 2 et le ou les détecteurs infrarouges 3a, 3b.

La cavité optique 1 est avantageusement dépourvue de lentilles.

Source lumineuse

La source lumineuse 2 comporte préférentiellement un élément émetteur d'un rayonnement infrarouge. Par source lumineuse orientée vers la partie de liaison 6a, 6b, on entend que ledit élément émetteur est disposé en regard de la partie de liaison 6a, 6b. L'axe optique de la source lumineuse 2 est dirigé vers la partie de liaison 6a, 6b.

La source lumineuse 2 comporte avantageusement un élément émetteur, par exemple de type filament, dans lequel on fait circuler un courant électrique de sorte que l'élément s'échauffe et émet un rayonnement infrarouge. L'élément présente une dimension h suivant la direction Z (ou Z'), et vérifie préférentiellement :

100 $\mu m \le h \le H \le 1{,}5$ mm, préférentiellement 250 $\mu m \le h \le H \le 1200$ $\mu m$.

L'élément présente préférentiellement la forme d'un disque présentant une surface circulaire, avec un diamètre de 250 $\mu$m (correspondant à la dimension h).

On définit l'axe de la source lumineuse 2, ou encore l'axe optique de la source lumineuse 2 comme la normale à la surface circulaire. A titre d'exemple non limitatif, le disque peut présenter une épaisseur de 400 nm suivant l'axe de la source lumineuse 2. La courbe directrice du cylindre 10 image la source lumineuse 2 dans une seule direction, à savoir le plan de la cavité optique 1. L'image de la source lumineuse 2 (i.e. l'élément en forme de disque) est un rectangle présentant une largeur de 250 $\mu$m et une hauteur de 600 $\mu$m (correspondant à la hauteur de la cavité optique 1). La normale dudit rectangle (image de la source lumineuse 2) est dirigée vers la partie de liaison 6a, 6b. De manière plus préférentielle, la normale est interposée entre les première et seconde extrémités 100, 101 et elle est sensiblement parallèle auxdites extrémités 100, 101.

Détecteurs infrarouges

Le capteur NDIR comporte préférentiellement deux détecteurs infrarouges 3a, 3b : un détecteur de mesure 3a, et un détecteur de référence 3b. Le détecteur de mesure 3a et le détecteur de référence 3b se trouvent respectivement dans le plan PFM et le plan PFR. Chaque détecteur infrarouge 3a, 3b présente une surface sensible à l'infrarouge préférentiellement, disposée entre la première extrémité 100 et la deuxième extrémité 101, et agencée en regard de la partie de liaison 6a, 6b.

A titre d'exemple non limitatif, la surface sensible peut avoir la forme d'un carré de 600 $\mu$m de côté. On définit l'axe d'un détecteur infrarouge 3a, 3b comme la normale à la surface sensible. L'axe de la source lumineuse 2 et l'axe X (ou X') forment préférentiellement un angle de 25° afin de maximiser le flux lumineux reçu par les détecteurs infrarouges 3a, 3b. En d'autres termes, l'axe de la source lumineuse 2 forme préférentiellement un angle de 25° avec le PFM. L'axe du détecteur de mesure 3a et l'axe X (ou X') forment préférentiellement un angle de 25° afin d'optimiser le flux lumineux reçu. En d'autres termes, l'axe du détecteur de mesure 3a forme préférentiellement un angle de 25° avec le PFM. L'axe du détecteur de référence 3b est préférentiellement perpendiculaire à l'axe Y (ou Y') afin d'optimiser le flux lumineux reçu. L'axe du détecteur de référence 3b forme préférentiellement un angle de 45° avec le PFR.

Le détecteur de mesure 3a est équipé préférentiellement d'un filtre optique de type passe-bande, centré sur la bande spectrale d'absorption du gaz à détecter. A titre d'exemples non limitatifs, le gaz est sélectionné dans le groupe comportant le monoxyde de carbone, le dioxyde de carbone, au moins un hydrocarbure, un hydrochlorofluorocarbure, un chlorofluorocarbure, le monoxyde d'azote, le dioxyde d'azote, le dioxyde de soufre, l'ozone. Le détecteur de référence 3b est préférentiellement équipé d'un filtre optique centré sur une bande spectrale qui n'est absorbée par aucun gaz à détecter.

A titre d'exemples non limitatifs, le gaz peut également être sélectionné parmi les gaz suivants, absorbant dans une bande spectrale d'absorption comprise entre 0,78 $\mu$m et 12 $\mu$m :

- HF, HCl, $SO_3$ HBr, $H_2S$, COS, $C_2H_6$, $C_3H_8$, $C_4H_{10}$,
- $COCl_2$, $BF_3$, $CH_4$, $HNO_3$, un composé organique volatil (e.g. $C_6H_6$, $CH_3COCH_3$), $B_2H_6$, CO, $CS_2$, HCN, $WF_6$, $N_2O$, $NH_3$,
- $AsH_3$, un hydrocarbure aromatique polycyclique, le benzène, le toluène, les trois isomères du xylène, $C_2H_4O$, $BCl_3$.

La bande de transmission spectrale des filtres classiques dépend généralement de l'angle d'incidence. Autrement dit, pour des angles supérieurs à un certain seuil (par exemple 45° ou encore 30°), le filtre transmet des longueurs d'onde qui ne sont plus dans la bande d'absorption du gaz à détecter.

Ainsi, un tel capteur NDIR selon l'invention permet d'augmenter, à la fois, l'efficacité optique et la compacité de la cavité optique relativement à l'état de la technique, tout en optimisant la répartition angulaire du rayonnement infrarouge récolté par le ou les détecteurs. L'agencement astucieux des différents éléments du capteur, notamment, la source lumineuse le ou les détecteurs infrarouges, le ou les miroirs, et les éléments réfléchissants s'étendant aux extrémités de la cavité optique, permet de conjuguer la source lumineuse avec le ou les détecteurs infrarouges dans le plan de la cavité optique de sorte à guider la lumière infrarouge suivant la direction de l'épaisseur et selon une répartition angulaire optimale (des angles d'incidence inférieurs audit seuil pour une majorité des rayonnements incidents) afin d'utiliser au mieux les propriétés d'émission angulaire de la source lumineuse.

Procédé de fabrication

Un procédé de fabrication d'un capteur infrarouge non-dispersif pour détecter un gaz, comporte les étapes :

a) former une cavité optique 1 adaptée pour recevoir le gaz, et délimitée par :

- des première et seconde extrémités 100, 101 opposées, et
- une partie de liaison 6a, 6b reliant les première et seconde extrémités 100, 101 ;

b) agencer une source lumineuse 2 pour émettre une lumière infrarouge dans la cavité optique 1 entre les premier et second éléments réfléchissants 5a, 5b ;

c) agencer au moins un détecteur infrarouge 3a, 3b pour détecter la lumière infrarouge ;

d) agencer au moins un miroir 4a, 4b dans la cavité optique 1 pour guider la lumière infrarouge vers ledit au moins un détecteur infrarouge 3a, 3b, ledit au moins un miroir 4a, 4b étant formé par un revêtement réfléchissant déposé sur la partie de liaison 6a, 6b, la source lumineuse 2 étant orientée de manière à avoir un axe optique sécant audit au moins un miroir 4a, 4b.

Le procédé comporte une étape consistant à former des premier et second éléments réfléchissants 5a, 5b s'étendant respectivement aux première et seconde extrémités 100, 101 de la cavité optique 1, et possédant un coefficient de réflexion de la lumière infrarouge supérieur ou égal à 75% pour tout angle d'incidence, les premier et second éléments réfléchissants 5a, 5b étant des miroirs plans possédant chacun ledit coefficient de réflexion.

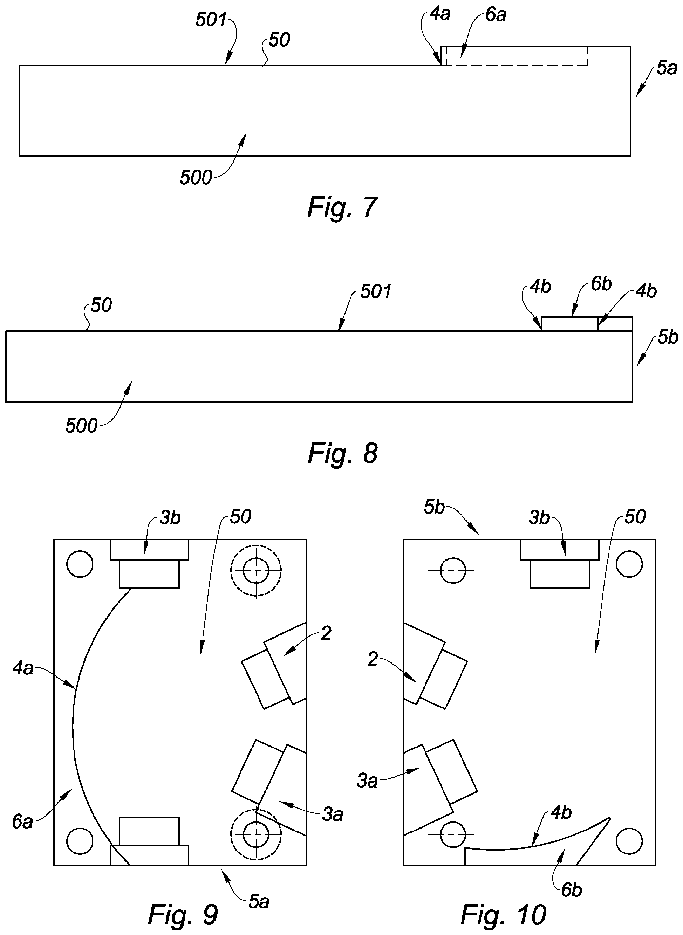

Selon un premier mode de mise en oeuvre illustré aux figures 7 et 8, l'étape a) comporte les étapes :

$a_1$) prévoir des premier et second substrats 500 d'un matériau, le matériau étant de préférence semi-conducteur, plus préférentiellement le silicium ;
$a_2$) évider chacun des premier et second substrats 500 de manière à former un fond 50 et à conserver une partie superficielle 6a, 6b,
$a_3$) assembler les premier et second substrats 500 de sorte que :

- les fonds 50 forment les première et seconde extrémités 100, 101 opposées de la cavité optique 1,
- les parties superficielles 6a, 6b conservées lors de l'étape $a_2$) forment la partie de liaison reliant les première et seconde extrémités 100, 101.

L'étape $a_2$) est avantageusement exécutée par une gravure ionique réactive profonde. L'étape $a_2$) comporte préférentiellement une étape préalable consistant à déposer une résine photosensible à la surface des premier et second substrats 500. Puis les évidements 501 peuvent être obtenus par des étapes de photolithographie et de gravure. L'étape $a_2$) est avantageusement exécutée de sorte que les évidements 501 obtenus permettent de former des fonds 50 plans.

Les premier et second éléments réfléchissants 5a, 5b sont avantageusement formés par un dépôt d'un matériau métallique sur les fonds 50 des premier et second substrats 500, le dépôt étant de préférence exécuté par pulvérisation cathodique. Le dépôt du matériau métallique peut également être exécuté par évaporation sous vide ou par électrolyse. Le dépôt du matériau métallique est exécuté avant l'étape $a_3$).

Le ou les miroirs 4a, 4b sont avantageusement formés par un dépôt d'un matériau métallique sur un bord latéral d'une partie superficielle 6a, 6b, le dépôt étant de préférence exécuté par pulvérisation cathodique. Le dépôt du matériau métallique peut également être exécuté par évaporation sous vide ou par électrolyse. Le dépôt du matériau métallique est exécuté avant l'étape $a_3$).

Selon un deuxième mode de mise en oeuvre, l'étape a) comporte les étapes :

$a_1$) prévoir des premier et second moules comportant respectivement une empreinte de première et seconde pièces comportant chacune une embase 500 surmontée d'une partie superficielle 6a, 6b ;
$a_2$) injecter un matériau plastique dans les premier et second moules de manière à obtenir les première et seconde pièces,
$a_3$) assembler les première et seconde pièces de sorte que :

- les embases 500 forment les première et seconde extrémités 100, 101 opposées de la cavité optique 1,
- les parties superficielles 6a, 6b forment la partie de liaison reliant les première et seconde extrémités 100, 101.

L'étape $a_1$) est de préférence exécutée de sorte que les premier et second moules comportent chacun une partie fixe et une partie mobile. L'étape $a_2$) est de préférence exécutée avec une presse à injecter.

Les premier et second éléments réfléchissants 5a, 5b sont avantageusement formés par un dépôt d'un matériau métallique sur les embases 500 des première et seconde pièces, le dépôt étant de préférence exécuté par pulvérisation cathodique. Le dépôt du matériau métallique peut également être exécuté par évaporation sous vide ou par électrolyse. Le dépôt du matériau métallique est exécuté avant l'étape $a_3$).

Le ou les miroirs 4a, 4b sont avantageusement formés par un dépôt d'un matériau métallique sur un bord latéral d'une partie superficielle 6a, 6b, le dépôt étant de préférence exécuté par pulvérisation cathodique. Le dépôt du matériau métallique peut également être exécuté par évaporation sous vide ou par électrolyse. Le dépôt du matériau métallique est exécuté avant l'étape $a_3$).

## Revendications

1. Capteur infrarouge non-dispersif pour détecter un gaz, comportant :

- une cavité optique (1) adaptée pour recevoir le gaz, et délimitée par :

+ des première et seconde extrémités (100, 101) longitudinales et opposées, et

+ une partie de liaison (6a, 6b) s'étendant transversalement entre la première extrémité (100) et la seconde extrémité (101) pour relier les première et seconde extrémités (100, 101) ;

- une source lumineuse (2) agencée pour émettre une lumière infrarouge dans la cavité optique (1) ;
- au moins un détecteur infrarouge (3a, 3b) agencé pour détecter la lumière infrarouge ;
- au moins un miroir (4a, 4b) agencé dans la cavité optique (1) pour guider la lumière infrarouge vers ledit au moins un détecteur infrarouge (3a, 3b) ;
- des premier et second éléments réfléchissants (5a, 5b) s'étendant respectivement aux première et seconde extrémités (100, 101) de la cavité optique (1), chacun des premier et second éléments (5a, 5b) comportant une surface réfléchissante (50), et possédant un coefficient de réflexion de la lumière infrarouge supérieur ou égal à 75% pour tout angle d'incidence, les premier et second éléments réfléchissants (5a, 5b) étant des miroirs plans possédant ledit coefficient de réflexion ;
**caractérisé en ce que** le capteur est conçu de sorte à disposer la source lumineuse (2) entre les premier et second éléments réfléchissants (5a, 5b), la source lumineuse (2) étant orientée de manière à avoir un axe optique sécant audit au moins un miroir (4a, 4b), ledit au moins un miroir (4a, 4b) étant formé par un revêtement réfléchissant déposé sur la partie de liaison (6a, 6b).

2. Capteur selon la revendication 1, dans lequel les première et seconde extrémités (100, 101) et la partie de liaison (6a, 6b) forment un cylindre délimitant la cavité optique (1); les première et seconde extrémités (100, 101) formant les bases du cylindre.

3. Capteur selon la revendication 1, dans lequel la partie de liaison (6a, 6b) s'étend transversalement entre les première et seconde extrémités (100, 101) suivant une direction curviligne.

4. Capteur selon la revendication 3, dans lequel la direction curviligne forme un arc de cercle, et dans lequel les première et seconde extrémités (100, 101) et la partie de liaison (6a, 6b) forment un tore tronqué délimitant la cavité optique (1) ; le tore étant tronqué par un plan perpendiculaire à la direction curviligne.

5. Capteur selon la revendication 1, dans lequel les première et seconde extrémités (100, 101) et la partie de liaison (6a, 6b) forment un tronc de cône à bases parallèles délimitant la cavité optique (1), les première et seconde extrémités (100, 101) formant lesdites bases parallèles.

6. Capteur selon l'une des revendications 1 à 5, dans lequel ledit coefficient de réflexion est supérieur ou égal à 80%, de préférence supérieur ou égal à 85%, plus préférentiellement supérieur ou égal à 90%, pour tout angle d'incidence.

7. Capteur selon l'une des revendications 1 à 6, dans lequel ledit coefficient de réflexion est supérieur ou égal à 95%, de préférence supérieur ou égal à 98% pour tout angle d'incidence inférieur à 45°.

8. Capteur selon l'une des revendications 1 à 7, dans lequel la surface réfléchissante (50) est d'un matériau métallique, de préférence sélectionné dans le groupe comportant l'or, l'argent et l'aluminium.

9. Capteur selon la revendication précédente, dans lequel la surface réfléchissante (50) est revêtue d'une couche de protection contre une corrosion du matériau métallique.

10. Capteur selon l'une des revendications 1 à 9, comportant un détecteur infrarouge de référence (3b), et ledit au moins un miroir (4a, 4b) présente une rugosité de surface supérieure à un seuil à partir duquel la lumière infrarouge diffusée par ledit au moins un miroir (4a, 4b) peut être détectée par le détecteur infrarouge de référence (3b).

11. Capteur selon l'une des revendications 1 à 10, dans lequel les surfaces réfléchissantes (50) des premier et second éléments réfléchissants (5a, 5b) sont parallèles.

12. Capteur selon la revendication précédente, dans lequel la partie de liaison (6a, 6b) s'étend transversalement entre les première et seconde extrémités (100, 101) suivant la normale aux surfaces réfléchissantes (50), à $\pm$ 3° près.

13. Capteur selon l'une des revendications 1 à 12, dans lequel la cavité optique (1) est dépourvue de lentilles.

14. Procédé d'utilisation d'un capteur selon l'une des revendications précédentes, dans lequel le gaz est sélectionné dans le groupe comportant le monoxyde de carbone, le dioxyde de carbone, au moins un hydrocarbure, un hydrochlorofluorocarbure, un chlorofluorocarbure, le monoxyde d'azote, le dioxyde d'azote, le dioxyde de soufre, l'ozone.

15. Procédé de fabrication d'un capteur infrarouge non-dispersif pour détecter un gaz, comportant les étapes :

a) former une cavité optique (1) adaptée pour recevoir le gaz, et délimitée par :

- des première et seconde extrémités (100, 101) opposées, et
- une partie de liaison (6a, 6b) reliant les première et seconde extrémités (100, 101) ;

b) agencer une source lumineuse (2) pour émettre une lumière infrarouge dans la cavité optique (1) entre les premier et second éléments réfléchissants (5a, 5b) ;
c) agencer au moins un détecteur infrarouge (3a, 3b) pour détecter la lumière infrarouge ;
d) agencer au moins un miroir (4a, 4b) dans la cavité optique (1) pour guider la lumière infrarouge vers ledit au moins un détecteur infrarouge (3a, 3b), ledit au moins un miroir (4a, 4b) étant formé par un revêtement réfléchissant déposé sur la partie de liaison (6a, 6b), la source lumineuse (2) étant orientée de manière à avoir un axe optique sécant audit au moins un miroir (4a, 4b);
le procédé comportant une étape consistant à former des premier et second éléments réfléchissants (5a, 5b) s'étendant respectivement aux première et seconde extrémités (100, 101) de la cavité optique (1), et possédant un coefficient de réflexion de la lumière infrarouge supérieur ou égal à 75% pour tout angle d'incidence, les premier et second éléments réfléchissants (5a, 5b) sont des miroirs plans possédant chacun ledit coefficient de réflexion .

16. Procédé selon la revendication précédente, dans lequel l'étape a) comporte les étapes :

$a_1$) prévoir des premier et second substrats (500) d'un matériau, le matériau étant de préférence semi-conducteur, plus préférentiellement le silicium ;
$a_2$) évider chacun des premier et second substrats (500) de manière à former un fond (50) et à conserver une partie superficielle (6a, 6b) ; l'étape $a_2$) étant de préférence exécutée par une gravure ionique réactive ;
$a_3$) assembler les premier et second substrats (500) de sorte que :

- les fonds (50) forment les première et seconde extrémités (100, 101) opposées de la cavité optique (1),
- les parties superficielles (6a, 6b) conservées lors de l'étape $a_2$) forment la partie de liaison reliant les première et seconde extrémités (100, 101).

17. Procédé selon la revendication précédente, dans lequel les premier et second éléments réfléchissants (5a, 5b) sont formés par un dépôt d'un matériau métallique sur les fonds (50) des premier et second substrats (500).

18. Procédé selon la revendication 16 ou 17, dans lequel ledit au moins un miroir (4a, 4b) agencé lors de l'étape d) est formé par un dépôt d'un matériau métallique sur un bord latéral d'une partie superficielle (6a, 6b) conservée lors de l'étape $a_2$).

19. Procédé selon la revendication 15, dans lequel l'étape a) comporte les étapes :

$a_1$) prévoir des premier et second moules comportant respectivement une empreinte de première et seconde pièces comportant chacune une embase (500) surmontée d'une partie superficielle (6a, 6b) ;
$a_2$) injecter un matériau plastique dans les premier et second moules de manière à obtenir les première et seconde pièces ;
$a_3$) assembler les première et seconde pièces de sorte que :

- les embases (500) forment les première et seconde extrémités (100, 101) opposées de la cavité optique (1),
- les parties superficielles (6a, 6b) forment la partie de liaison reliant les première et seconde extrémités (100, 101).

20. Procédé selon la revendication 19, dans lequel les premier et second éléments réfléchissants (5a, 5b) sont formés par un dépôt d'un matériau métallique sur les embases (500) des première et seconde pièces.

21. Procédé selon la revendication 19 ou 20, dans lequel ledit au moins un miroir (4a, 4b) agencé lors de l'étape d) est formé par un dépôt d'un matériau métallique sur un bord latéral d'une partie superficielle (6a, 6b).

**Patentansprüche**

1. Nichtdispersiver Infrarotsensor zur Gasdetektion, umfassend:

   - einen optischen Hohlraum (1), der dazu vorgesehen ist, das Gas aufzunehmen, und der begrenzt ist durch:

     * erste und zweite einander gegenüberliegend Längsenden (100, 101), und
     * einen Verbindungsteil (6a, 6b), der sich quer zwischen dem ersten Ende (100) und dem zweiten Ende (101) erstreckt, um die ersten und zweiten Enden (100, 101) zu verbinden;

   - eine Lichtquelle (2), die dazu vorgesehen ist, Infrarotlicht in den optischen Hohlraum (1) zu senden;
   - mindestens einen Infrarotdetektor (3a, 3b), der dazu vorgesehen ist, das Infrarotlicht zu erfassen;
   - mindestens einen Spiegel (4a, 4b), der in dem optischen Hohlraum (1) angeordnet ist, um das Infrarotlicht zu dem mindestens einen Infrarotdetektor (3a, 3b) zu leiten;
   - erste und zweite reflektierende Elemente (5a, 5b), die sich an dem ersten bzw. zweiten Ende (100, 101) des optischen Hohlraums (1) erstrecken, wobei jedes der ersten und zweiten Elemente (5a, 5b) eine reflektierende Oberfläche (50) umfasst und einen Reflexionskoeffizienten des Infrarotlichts größer oder gleich 75 % für jeden Einfallswinkel besitzen, wobei die ersten und zweiten reflektierenden Elemente (5a, 5b) ebene Spiegel sind, die den Reflexionskoeffizienten besitzen,

   **dadurch gekennzeichnet, dass** der Sensor eingerichtet ist, um die Lichtquelle (2) zwischen den ersten und zweiten reflektierenden Elementen (5a, 5b) anzuordnen, wobei die Lichtquelle (2) derart ausgerichtet ist, dass sie eine optische Achse hat, die den mindestens einen Spiegel (4a, 4b) schneidet, wobei der mindestens eine Spiegel (4a, 4b) von einer reflektierenden Beschichtung, die auf den Verbindungsteil (6a, 6b) aufgebracht ist, gebildet ist.

2. Sensor nach Anspruch 1, bei dem die ersten und zweiten Enden (100, 101) und der Verbindungsteil (6a, 6b) einen Zylinder bilden, der den optischen Hohlraum (1) begrenzt; wobei die ersten und zweiten Enden (100, 101) die jeweilige Basis des Zylinders bilden.

3. Sensor nach Anspruch 1, bei dem sich der Verbindungsteil (6a, 6b) quer zwischen den ersten und zweiten Enden (100, 101) in eine gebogene Richtung erstreckt.

4. Sensor nach Anspruch 3, bei dem die gebogene Richtung einen Kreisbogen bildet, und bei dem die ersten und zweiten Enden (100, 101) und der Verbindungsteil (6a, 6b) einen abgestumpften Torus bilden, der den optischen Hohlraum (1) begrenzt; wobei der Torus durch eine Ebene senkrecht auf die gebogene Richtung abgestumpft ist.

5. Sensor nach Anspruch 1, bei dem die ersten und zweiten Enden (100, 101) und der Verbindungsteil (6a, 6b) einen Kegelstumpf mit paralleler Basis bilden, der den optischen Hohlraum (1) begrenzt, wobei die ersten und zweiten Enden (100, 101) jeweils die parallele Basis bilden.

6. Sensor nach einem der Ansprüche 1 bis 5, bei dem der Reflexionskoeffizient größer oder gleich 80 %, vorzugsweise größer oder gleich 85 %, noch bevorzugter größer oder gleich 90 % für jeden Einfallswinkel ist.

7. Sensor nach einem der Ansprüche 1 bis 6, bei dem der Reflexionskoeffizient größer oder gleich 95 %, vorzugsweise größer oder gleich 98 % für jeden Einfallswinkel unter 45° ist.

8. Sensor nach einem der Ansprüche 1 bis 7, bei dem die reflektierende Oberfläche (50) aus einem metallischen Material ist, vorzugsweise ausgewählt in der Gruppe, umfassend Gold, Silber und Aluminium.

9. Sensor nach dem vorhergehenden Anspruch, bei dem die reflektierende Oberfläche (50) mit einer Schutzschicht gegen Korrosion des metallischen Materials beschichtet ist.

10. Sensor nach einem der Ansprüche 1 bis 9, umfassend einen Referenz-Infrarotdetektor (3b), wobei der mindestens eine Spiegel (4a, 4b) eine Oberflächenrauigkeit über einer Grenze aufweist, ab der das von dem mindestens einen Spiegel (4a, 4b) verbreitete Infrarotlicht von dem Referenz-Infrarotdetektor (3b) erfasst werden kann.

11. Sensor nach einem der Ansprüche 1 bis 10, bei dem die reflektierenden Oberflächen (50) der ersten und zweiten reflektierenden Elemente (5a, 5b) parallel sind.

12. Sensor nach dem vorhergehenden Anspruch, bei dem sich der Verbindungsteil (6a, 6b) quer zwischen den ersten und zweiten Enden (100, 101) entlang der Normalen auf die reflektierenden Oberflächen (50) bis auf ± 3° erstreckt.

13. Sensor nach einem der Ansprüche 1 bis 12, bei dem der optische Hohlraum (1) keine Linsen besitzt.

14. Verfahren zur Verwendung eines Sensors nach einem der vorhergehenden Ansprüche, bei dem das Gas in der Gruppe ausgewählt ist, umfassend Kohlenmonoxid, Kohlendioxid, mindestens einen Kohlenwasserstoff, Fluorchlorkohlenwasserstoff, Chlorfluorkarbid, Stickstoffmonoxid, Stickstoffdioxid, Schwefeldioxid, Ozon.

15. Verfahren zur Herstellung eines nichtdispersiven Infrarotsensors zur Gasdetektion, umfassend die folgenden Schritte:

   a) Bildung eines optischen Hohlraums (1), der dazu vorgesehen ist, das Gas aufzunehmen, und der begrenzt ist durch:

   * erste und zweite einander gegenüberliegende Längsenden (100, 101), und
   * einen Verbindungsteil (6a, 6b), der die ersten und zweiten Enden (100, 101) verbindet;

   b) Anordnung einer Lichtquelle (2), um Infrarotlicht in den optischen Hohlraum (1) zwischen den ersten und zweiten reflektierenden Elementen (5a, 5b) zu senden;
   c) Anordnung mindestens eines Infrarotdetektors (3a, 3b), um das Infrarotlicht zu erfassen;
   d) Anordnung mindestens eines Spiegels (4a, 4b) in dem optischen Hohlraum (1), um das Infrarotlicht zu dem mindestens einen Infrarotdetektor (3a, 3b) zu leiten, wobei der mindestens eine Spiegel (4a, 4b) von einer reflektierenden Beschichtung gebildet ist, die auf den Verbindungsteil (6a, 6b) aufgebracht ist, wobei die Lichtquelle derart ausgerichtet ist, dass sie eine optische Achse hat, die den mindestens einen Spiegel (4a, 4b) schneidet;
   wobei das Verfahren einen Schritt umfasst, der darin besteht, erste und zweite reflektierende Elemente (5a, 5b) zu bilden, die sich an dem ersten bzw. zweiten Ende (100, 101) des optischen Hohlraums (1) erstrecken und einen Reflexionskoeffizienten des Infrarotlichts größer oder gleich 75 % für jeden Einfallswinkel besitzen, wobei die ersten und zweiten reflektierenden Elemente (5a, 5b) ebene Spiegel sind, die jeweils den Reflexionskoeffizienten besitzen.

16. Verfahren nach dem vorhergehenden Anspruch, bei dem der Schritt a) die folgenden Schritte umfasst:

   $a_1$) Vorsehen erster und zweiter Substrate (500) eines Materials, wobei das Material vorzugsweise ein Halbleiter, bevorzugter Silizium ist;
   $a_2$) Aushöhlen der ersten und zweiten Substrate (500), um einen Boden (50) zu bilden und einen Oberflächenteil (6a, 6b) zu bewahren; wobei der Schritt $a_2$) vorzugsweise durch eine reaktive ionische Gravur ausgeführt wird;
   $a_3$) Zusammenfügen der ersten und zweiten Substrate (500), so dass:

   - die Böden (50) die ersten und zweiten gegenüberliegenden Enden (100, 101) des optischen Hohlraums (1) bilden,
   - die in Schritt $a_2$) bewahrten Oberflächenteile (6a, 6b) den Verbindungsteil bilden, der die ersten und zweiten Enden (100, 101) verbindet.

17. Verfahren nach dem vorhergehenden Anspruch, bei dem die ersten und zweiten reflektierenden Elemente (5a, 5b) durch ein Aufbringen eines metallischen Materials auf die Böden (50) der ersten und zweiten Substrate (500) gebildet sind.

18. Verfahren nach Anspruch 16 oder 17, bei dem der mindestens eine in Schritt d) angeordnete Spiegel (4a, 4b) durch Aufbringen eines metallischen Materials auf einen Seitenrand eines in Schritt $a_2$) bewahrten Oberflächenteils (6a, 6b) gebildet ist.

19. Verfahren nach Anspruch 15, bei dem der Schritt a) die folgenden Schritte umfasst:

   $a_1$) Vorsehen erster und zweiter Formen, jeweils umfassend einen Abdruck von ersten und zweiten Teilen, jeweils umfassend einen Sockel (500) über dem ein Oberflächenteil (6a, 6b) montiert ist;
   $a_2$) Injizieren von Kunststoff in die ersten und zweiten Formen, um die ersten und zweiten Teile zu erhalten;

a$_3$) Zusammenfügen der ersten und zweiten Teile, so dass:

- die Sockel (500) die ersten und zweiten gegenüberliegenden Enden (100, 101) des optischen Hohlraums (1) bilden,
- die Oberflächenteile (6a, 6b) den Verbindungsteil bilden, der die ersten und zweiten Enden (100, 101) verbindet.

20. Verfahren nach Anspruch 19, bei dem die ersten und zweiten reflektierenden Elemente (5a, 5b) durch Aufbringen eines metallischen Materials auf die Sockel (500) der ersten und zweiten Teile gebildet sind.

21. Verfahren nach Anspruch 19 oder 20, bei dem der mindestens eine in Schritt d) angeordnete Spiegel (4a, 4b) durch Aufbringen eines metallischen Materials auf einen Seitenrand eines Oberflächenteils (6a, 6b) gebildet ist.

**Claims**

1. A nondispersive infrared gas detection sensor, comprising:

- an optical cavity (1) capable of receiving the gas, and defined by:

+first and second opposite longitudinal ends (100, 101), and
+a connecting portion (6a, 6b) extending transversely between the first end (100) and the second end (101) to connect the first and second ends (100, 101);

- a light source (2) arranged to emit infrared light in the optical cavity (1);
- at least one infrared detector (3a, 3b) arranged to detect the infrared light;
- at least one mirror (4a, 4b) arranged in optical cavity (1) to guide the infrared light towards said at least one infrared detector (3a, 3b);
- first and second reflective elements (5a, 5b) respectively extending at the first and second ends (100, 101) of the optical cavity (1), each of the first and second reflective elements (5a, 5b) comprising a reflective surface (50), and having an infrared light reflection coefficient greater than or equal to 75% for any angle of incidence; the first and second reflective elements (5a, 5b) being planar mirrors having said reflection coefficient;
**characterized in that** the sensor is designed so as to arrange the light source (2) between the first and second reflective elements (5a, 5b), the light source (2) being directed so as to present an optical axis intersecting said at least one mirror (4a, 4b), said at least one mirror (4a, 4b) being formed by a reflective coating deposited on the connecting portion (6a, 6b).

2. The sensor according to claim 1, wherein the first and second ends (100, 101) and the connecting portion (6a, 6b) form a cylinder defining the optical cavity (1); the first and second ends (100, 101) forming the bases of the cylinder.

3. The sensor according to claim 1, wherein the connecting portion (6a, 6b) extends transversely between the first and second ends (100, 101) along a curvilinear direction.

4. The sensor according to claim 3, wherein the curvilinear direction forms an arc of a circle, and wherein the first and second ends (100, 101) and the connecting portion (6a, 6b) form a truncated torus defining the optical cavity (1); the torus being truncated by a plane perpendicular to the curvilinear direction.

5. The sensor according to claim 1, wherein the first and second ends (100, 101) and the connecting portion (6a, 6b) form a frustum with parallel bases defining the optical cavity (1), the first and second ends (100, 101) forming said parallel bases.

6. The sensor according to any of claims 1 to 5, wherein said reflection coefficient is greater than or equal to 80%, preferably greater than or equal to 85%, more preferably greater than or equal to 90%, for any angle of incidence.

7. The sensor according to any of claims 1 to 6, wherein said reflection coefficient is greater than or equal to 95%, preferably greater than or equal to 98%, for any angle of incidence smaller than 45°.

8. The sensor according to any of claims 1 to 7, wherein the reflective surface (50) is made of a metallic material, preferably selected from the group comprising gold, silver, and aluminum.

9. The sensor according to preceding claim, wherein the reflective surface (50) is coated with a layer of protection against a corrosion of the metallic material.

10. The sensor according to any of claims 1 to 9, comprising a reference infrared detector (3b), and said at least one mirror (4a, 4b) has a surface roughness greater than a threshold from which the infrared light diffused by said at least one mirror (4a, 4b) can be detected by the reference infrared detector.

11. The sensor according to any of claims 1 to 10, wherein the reflective surfaces (50) of the first and second reflective elements (5a, 5b) are parallel.

12. The sensor according to preceding claim, wherein the connecting portion (6a, 6b) extends transversely between the first and second ends (100, 101) along the normal to the reflective surfaces (50), to within $\pm 3°$.

13. The sensor according to any of claims 1 to 12, wherein the optical cavity (1) comprises no lenses.

14. Method for using a sensor according to one of the preceding claims, wherein the gas is selected from the group comprising carbon monoxide, carbon dioxide, at least a hydrocarbon, a hydrochlorofluorocarbon, a chlorofluorocarbon, nitrogen monoxide, nitrogen dioxide, sulfur dioxide, ozone.

15. A method of manufacturing a nondispersive infrared gas detection sensor, comprising the steps of:

   a) forming an optical cavity (1) capable of receiving the gas, and defined by:

   - first and second opposite ends (100, 101), and
   - a connecting portion (6a, 6b) connecting the first and second ends (100, 101);

   b) arranging a light source (2) to emit infrared light in the optical cavity (1) between the first and second reflective elements (5a, 5b);
   c) arranging at least one infrared detector (3a, 3b) to detect the infrared light;
   d) arranging at least one mirror (4a, 4b) in the optical cavity (1) to guide the infrared light towards said at least one infrared detector (3a, 3b), said at least one mirror (4a, 4b) being formed by a reflective coating deposited on the connecting portion (6a, 6b), the light source (2) being directed so as to present an optical axis intersecting said at least one mirror (4a, 4b);
   the method comprising a step of forming first and second reflective elements (5a, 5b) respectively extending at the first and second ends (100, 101) of the optical cavity (1), and having an infrared light reflection coefficient greater than or equal to 75% for any angle of incidence, the first and second reflective elements (5a, 5b) are planar mirrors each having said reflection coefficient.

16. The method according to preceding claim, wherein step a) comprises the steps of:

   $a_1$) providing first and second substrates (500) of a material, the material being preferably semiconductor, more preferably silicon;
   $a_2$) hollowing each of the first and second substrates (500) so as to form a recessed surface (50) and to keep a surface portion (6a, 6b); step $a_2$) being preferably executed by reactive ion etching;
   $a_3$) assembling the first and second substrates (500) so that:

   - the recessed surfaces (50) form first and second opposite ends (100, 101) of optical cavity (1),
   - the surface portions (6a, 6b) kept at step $a_2$) form the connecting portion connecting the first and second ends (100, 101).

17. The method according to preceding claim, wherein the first and second reflective elements (5a, 5b) are formed by deposition of a metallic material on the recessed surfaces (50) of the first and second substrates (500).

18. The method according to claim 16 or 17, wherein said at least one mirror (4a, 4b) arranged at step d) is formed by deposition of a metallic material on a lateral edge of a surface portion (6a, 6b) kept at step $a_2$).

**19.** The method according to claim 15, wherein step a) comprises the steps of:

$a_1$) providing first and second molds respectively comprising an impression of first and second parts each comprising a base (500) topped with a surface portion (6a, 6b);

$a_2$) injecting a plastic material into the first and second molds to obtain the first and second parts;

$a_3$) assembling the first and second parts so that:

- the bases (500) form first and second opposite ends (100, 101) of the optical cavity (1),
- the surface portions (6a, 6b) form the connecting portion connecting the first and second ends (100, 101).

**20.** The method according to claim 19, wherein the first and second reflective elements (5a, 5b) are formed by deposition of a metallic material on the bases (500) of the first and second parts.

**21.** The method according to claim 19 or 20, wherein said at least one mirror (4a, 4b) arranged at step d) is formed by deposition of a metallic material on a lateral edge of a surface portion (6a, 6b).

Fig. 1

Fig. 2

Fig. 3

Fig. 4

Fig. 5

Fig. 6

EP 3 208 601 B1

*Fig. 7*

*Fig. 8*

*Fig. 9*

*Fig. 10*

22

Fig. 11

Fig. 12

Fig. 13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030058439 A

- EP 2573546 A